(19) Europäisches Patentamt
European Patent Office
Office européen des brevets

(11) **EP 2 311 909 A1**

(12) **EUROPÄISCHE PATENTANMELDUNG**

(43) Veröffentlichungstag:
20.04.2011 Patentblatt 2011/16

(21) Anmeldenummer: 09013117.8

(22) Anmeldetag: 16.10.2009

(51) Int Cl.:
*C08L 33/12* (2006.01)  *C08F 20/06* (2006.01)
*C08F 20/14* (2006.01)  *C08F 20/18* (2006.01)

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA RS**

(71) Anmelder: **Nanoresins AG**
**21502 Geesthacht (DE)**

(72) Erfinder:
• **Siol, Werner, Dr.**
**64297 Darmstadt (DE)**

• **Langerbeins, Klaus, Dr.**
**21502 Geesthacht (DE)**
• **Kühner, Uwe Dietrich, Dr.**
**20457 Hamburg (DE)**

(74) Vertreter: **Von Renesse, Dorothea et al**
**König Szynka Tilmann von Renesse**
**Patentanwälte Partnerschaft**
**Lohengrinstrasse 11**
**40549 Düsseldorf (DE)**

(54) **Hybrid-Partikel von Polymeren und Nanopartikeln**

(57) Gegenstand der Erfindung ist ein Hybrid-Partikel, enthaltend mindestens zwei Vinylpolymere (Vinylpolymere A und B), wobei Vinylpolymer A kolloidale $SiO_2$-Partikel mit einer mittleren Partikelgröße von 1 bis 150 nm enthält und Vinylpolymer B in der Lage ist, Hybrid-Partikel miteinander zu vernetzen.

EP 2 311 909 A1

**Beschreibung**

Die Erfindung betrifft Hybrid-Partikel auf Basis von nanoskaligen SiO$_2$-Partikeln und mindestens zwei unterschiedlichen Vinylpolymeren, eine Dispersion welche die Hybrid-Partikel enthält sowie einen daraus erhältlichen polymeren Werkstoff.

Polyacrylate und Polymethacrylate sind im Stand der Technik seit langem bekannt. Sie werden beispielsweise für die Herstellung von Plexiglas oder sogenannten Acrylatkautschuken verwendet.

Reine chemisch vernetzte Polyacrylate weisen nur eine verhältnismäßig geringe Festigkeit auf. Die mechanischen Eigenschaften von Polymeren lassen sich durch Füllstoffe verbessern. Aufgrund der verhältnismäßig leichten Verseifbarkeit von Acrylatestergruppen können bei Polyacrylaten nur wenige Füllstoffe Verwendung finden, beispielsweise Ruß. Dieser beeinträchtigt jedoch die häufig gewünschte Transparenz von Polyacrylaten.

In EP 1 216 262 ist ein Verfahren zur Herstellung einer wässrigen Dispersion von aus Polymerisat und feinteiligem anorganischen Feststoff aufgebauten Partikeln beschrieben. In EP 0 505 230 A1 sind Mischpartikel beschrieben, welche aus einer Polymermatrix bestehen, die jeweils ein SiO$_2$-Partikel umhüllt. In Angewandte Makromolekulare Chemie 242 (1996) 105-122 ist die Herstellung von Latex-Teilchen durch eine Emulsionspolymerisation von Ethylacrylat in Gegenwart funktionalisierter und nicht-funktionalisierter SiO$_2$-Partikel beschrieben.

Der Erfindung liegt die Aufgabe zugrunde, Hybrid-Partikel bereit zu stellen, die vielseitig verwendbar sind und den daraus herstellbaren polymeren Werkstoffen gute mechanische Eigenschaften verleihen.

Gegenstand der vorliegenden Erfindung ist somit ein Hybrid-Partikel, enthaltend mindestens zwei Vinylpolymere (Vinylpolymere A und B), wobei Vinylpolymer A kolloidale SiO$_2$-Partikel mit einer mittleren Partikelgröße von 1 bis 150 nm enthält und Vinylpolymer B in der Lage ist, die erfindungsgemäßen Hybrid-Partikel untereinander zu vernetzen.

Die Vinylpolymere A und B sind voneinander verschieden. Sie können sich beispielsweise hinsichtlich ihrer chemischen Zusammensetzung, ihrer chemischen Uneinheitlichkeit, ihrer Taktizität, ihrer Glasübergangstemperatur, ihres Molekulargewichts und/oder ihres Vernetzungsgrades unterscheiden. Bevorzugt unterscheiden sich die Vinylpolymere A und B in ihrer Monomerzusammensetzung. Dabei können die Vinylpolymere sich in den enthaltenen Monomeren unterscheiden oder - sofern jeweils die gleichen Monomere enthalten sind - in den Anteilen der jeweiligen Monomere.

Unter Vinylpolymer werden durch Polymerisation von Vinylmonomeren erhältliche Polymere verstanden, bevorzugt werden diese durch radikalische Polymerisation erhalten. Die Vinylpolymere können Homopolymere oder Copolymere darstellen, bevorzugt sind Copolymere. Ganz besonderes Interesse finden Homopolymere und Copolymere auf Basis von Estern der Acrylsäure und Methacrylsäure.

Unter einem Vinylmonomer wird ein Monomer verstanden werden, das eine ethylenisch ungesättigte C-C-Bindung enthält, die vorzugsweise endständig ist. Die Vinylmonomere sind bevorzugt radikalisch polymerisierbar.

Als Vinylmonomere kommen beispielsweise in Betracht Diene wie Isopren oder Butadien, Vinylhalogenide wie Vinylchlorid, Vinylester wie Vinylacetat und Vinylester α-verzweigter Monocarbonsäuren, Styrol und substituierte Styrole, Acryl- und Methacrylsäure und deren Derivate wie z.B. Ester der (Meth)acrylsäure, (Meth)acrylsäurenitrile, und (Meth)acrylsäureanhydride. Acrylsäure- und Methacrylsäureester weisen bevorzugt 1 bis 18 C-Atome, weiter vorzugsweise 1 bis 12 C-Atome in der Alkylkette auf. Die Alkylkette kann linear oder verzweigt sein und weitere Funktionalitäten wie z.B. Aminogruppen oder Alkoholgruppen aufweisen.

Beispiele für Vinylmonomere sind Methylacrylat, Ethylacrylat, n-Propylacrylat, n-Butylacrylat, Isobutylacrylat, sec-Butylacrylat, tert-Butylacrylat, n-Hexylacrylat, Ethylhexylacrylat, Isobornylacrylat, Methylmethacrylat, Ethylmethacrylat, n-Butylmethacrylat, Isobutylmethacrylat, tert-Butylmethacrylat, n-Hexylmethacrylat, Isobornylmethacrylat, Acrylnitril, Methacrylnitril, Styrol, 1,3-Butadien, 1,2-Butadien, Isopren, Vinylacetat, Vinylpropionat, Vinylchlorid, Vinylidenchlorid, Acrylsäure, Methacrylsäure, Acrylamid, Methacrylamid, 2-Hydroxyethylacrylat, 2-Hydroxyethylmethacrylat, Hydroxypropylacrylat, Propylenglycolmethacrylat, Butandiolmonoacrylat, Ethyldiglycolacrylat, Dimethylaminoethylacrylat, Dimethylaminoethylmethacrylat, N-(3-Dimethylaminopropyl)methacrylamid, Diethylaminoethylacrylat, tert-Butylaminoethylmethacrylat, 2-Chloroacrylnitril, N-Hydroxymethylacrylamid, N-Hydroxymethylmethacrylamid, 2-Sulfoethylmethacrylat, 2-Acrylamido-2-methylpropansulfonsäure, Fumarsäure, Maleinsäure, Crotonsäure, Itaconsäure, Glycidylmethacrylat, Diacetonacrylamid, Diacetonmethacrylamid, Acrylamidoglycolsäure, Methylacrylamidoglycolmethylether.

Besonders bevorzugte Acrylat-monomere sind Methylacrylat, Butylacrylat, Ethylacrylat und Ethylhexylacrylat. Ein besonders bevorzugtes Methacrylat-monomer ist Methylmethacrylat (MMA). Von besonderem Interesse sind auch PVC und Copolymere des Styrols mit Acrylnitril (SAN). Styrol kann als Comonomer eingesetzt werden, um den Brechungsindex von Polymer A oder Polymer B zu verändern.

Die Vinylpolymere A und B sind bevorzugt ausgewählt aus der Gruppe der Polymere basierend auf Dienen wie Isopren oder Butadien, Vinylhalogeniden wie Vinylchlorid, Vinylestern wie Vinylacetat und Vinylestern α-verzweigter Monocarbonsäuren, Styrol und substituierten Styrolen, Acryl- und Methacrylsäuren und deren Derivaten wie z.B. Estern der (Meth)acrylsäure, (Meth)acrylsäurenitrile, und (Meth)acrylsäureanhydride. Besonders bevorzugte Polymere sind Polymere von Estern der Acrylsäure und Methacrylsäure.

Vinylpolymer A ist bevorzugt ein Copolymer aus einem ersten Monomer mit einem Copolymerisationsparameter $r_1 > 1$ und einem zweiten Monomer mit einem Copolymerisationsparameter $r_2 < 0,8$.

Vinylpolymer A ist in einer weiteren bevorzugten Ausführungsform ein Copolymer, enthaltend Einheiten von Vinylacetat oder Ester der Acrylsäure und Methacrylsäure, insbesondere ein Copolymer auf Basis von Methylacrylat, Ethylacrylat, Butylacrylat und/oder Ethylhexylacrylat, ganz besonders bevorzugt ein Copolymer eines oder mehrerer dieser Monomeren mit MMA.

Vinylpolymer A ist weiter vorzugsweise ein Butylacrylat-Methylmethacrylat Copolymer. Das Gewichtsverhältnis von Butylacrylateinheiten : Methylmethacrylateinheiten liegt im Copolymer A vorzugsweise im Bereich von 10 : 1 bis 1 : 2.

Vinylpolymer B ist bevorzugt ein Copolymer aus einem ersten Monomer mit einem Copolymerisationsparameter $r_1 > 1$ und einem zweiten Monomer mit einem Copolymerisationsparameter $r_2 < 0,8$.

Vinylpolymer B ist in einer weiteren bevorzugten Ausführungsform ein Polymer auf Basis von MMA, insbesondere in Kombination mit Methylacrylat, Ethylacrylat, Butylacrylat und/oder Ethylhexylacrylat. Das Gewichtsverhältnis von Acrylat-Einheiten : Methylmethacrylat-Einheiten liegt im Copolymer B vorzugsweise im Bereich von 2 : 1 bis 1 : 100. Ebenfalls ist es bevorzugt, wenn das Vinylpolymer B in untergeordneten Mengen polare Vinylmonomere enthält, wie z.B. (Meth)acrylsäure, (Meth)acrylamid, Hydroethyl(meth)acrylat und Hydroxypropyl(meth)acrylat, z.B. wenn Vinylpolymer B (Meth)acrylsäure-Einheiten in Mengen zwischen 0,1 und 5 Gew.-%, bevorzugt zwischen 0,5 und 2 Gew.-% enthält. Für manche Anwendungen sind auch Vinylpolymere B auf Basis von Vinylchlorid von Interesse.

Das erfindungsgemäße Hybrid-Partikel enthält vorzugsweise mindestens zwei Vinylpolymere (Vinylpolymer A und Vinylpolymer B), z.B. von Estern der Acrylsäure, Estern der Methacrylsäure, Styrolen und/oder Vinylestern, welche voneinander verschiedene Glasübergangstemperaturen $T_g$ aufweisen. In der Regel weist Vinylpolymer A eine Glasübergangstemperatur $T_g$ im Bereich von -100 °C bis +100 °C auf, bevorzugt im Bereich von -80 °C bis +50 °C auf. Demgegenüber hat Vinylpolymer B bevorzugt eine im Vergleich zu Vinylpolymer A wenigstens 20 °C höhere Glasübergangstemperatur $T_g$ (berechnet nach der Fox-Gleichung oder gemessen).

Der Begriff Glasübergangstemperatur $T_g$ bezieht sich auf die Glasübergangstemperatur der in den erfindungsgemäßen Hybrid-Partikeln enthaltenen Polymere. Die Glasübergangstemperaturen etwaiger Homopolymerisate sind bekannt und z.B. aufgelistet in J.Brandrup, E.H. Immergut, Polymer Handbook 1st Ed. J. Wiley, New York, 1975. Die Glasübergangstemperatur eines Copolymerisates kann nach der sogenannten Fox-Gleichung berechnet werden (T.G. Fox, Bull. Am. Phys.

Soc. (Ser. II], 1, 123 [1956]). Gemessen werden Glasübergangstemperaturen üblicherweise mit DSC (Differential Scanning Calorimetry) oder per DMTA (Dynamisch-Mechanisch-Thermische Analyse).

Besondere Vorteile ergeben sich, wenn Vinylpolymer A und Vinylpolymer B miteinander zumindest teilverträglich sind, d.h. zumindest teilweise untereinander mischbar sind. Dies ist z.B. bei Vinylpolymeren A und B der Fall, die zumindest ein Vinylmonomeres gemeinsam haben. Beispiele sind Copolymere A und B aus Methacrylsäureestern (Monomer 1) und Acrylsäureestern (Monomer 2) mit Copolymerisationsparametern in der Regel von $r_1 > 2$ und $r_2 < 0,6$. Ein Beispiel für teilweise verträgliche Copolymere A und B ist eine Zusammensetzung von: Vinylpolymer A (Batchpolymerisation) mit 30 Gew.-% MMA, 70 Gew.-% Butylacrylat; und Vinylpolymer B (Zulaufpolymerisation) mit 50 Gew.-% MMA, 50 Gew.-% Butylacrylat. Es ist im Sinne der Erfindung bevorzugt, dass Vinylpolymer A und Vinylpolymer B sich physikalisch teilweise durchdringen.

Polymer A bildet bevorzugt ein Polymernetzwerk. Dabei enthält das Polymer A-Netzwerk die nanoskaligen $SiO_2$-Partikel entweder physikalisch eingeschlossen, in diesem Fall kann die Vernetzung über niedermolekulareherkömmliche Vernetzer als chemische Vernetzer erfolgen, oder chemisch verknüpft als Vernetzer. Bevorzugt ist eine Vernetzung über Methacrylatgruppen oder andere polymerisierbare Gruppen, z.B. Methacrylatgruppen, auf der Oberfläche der $SiO_2$-Partikel. In diesem Fall ist es bevorzugt, keine herkömmlichen Vernetzer zu verwenden.

Der Begriff herkömmlicher Vernetzer bezeichnet niedermolekulare (bevorzugt monomere) Moleküle mit wenigstens zwei polymerisierbaren Doppelbindungen, die zunächst lineare oder verzweigte makromolekulare Netzwerke zu dreidimensionalen polymeren Netzwerken verknüpfen können. Herkömmliche Vernetzer sind z.B. definiert in Römpp Chemie-Lexikon, 10. Auflage, Band 6, Seite 4836. Beispiele für solche Vernetzer sind Allylacrylat, Allylmethacrylat, Ethylenglycoldiacrylat, Diethylenglycoldiacrylat, Triethylenglycoldiacrylat, Tetraethylenglycoldiacrylat, Butandioldiacrylat, Hexandioldiacrylat, Neopentylglycoldiacrylat, Trimethylolpropantriacrylat, Tripropylenglycoldiacrylat, Tricyclodecanyldiacrylat, Tricyclodecanyldimethacrylat, N,N-Methylen-bis-acrylamid und N,N-Methylen-bis-methacrylamid.

Bei Verwendung von vernetzend wirkenden $SiO_2$-Partikeln werden bei der Herstellung von Polymer A bevorzugt keine oder allenfalls eine geringe Menge (maximal 2 Gew.-%) herkömmliche Vernetzermoleküle verwendet, bevorzugt maximal 1 Gew.-%, weiter vorzugsweise maximal 0,5 Gew.-%, weiter vorzugsweise maximal 0,2 Gew.-%. Bei einer bevorzugten Ausführungsform sind keine technisch relevanten Mengen von herkömmlichen Vernetzermolekülen in der polymerisierbaren Masse enthalten. Die Vernetzerfunktion wird ausschließlich von den Oberflächengruppen der $SiO_2$-Par-

tikeln wahrgenommen. Im Rahmen der Erfindung ist es auch möglich, daneben sehr geringe Mengen herkömmlicher Vernetzer einzusetzen, bevorzugt von Pfropfvernetzern wie Allylmethacrylat, um das Netzwerk zu modifizieren.

In dem Polymernetzwerk sind die nanoskaligen $SiO_2$-Partikel vorzugsweise homogen verteilt enthält, d. h. die Anzahl der $SiO_2$-Partikel pro Raumvolumen (oder in mikroskopischen Aufnahmen von Schnitten: pro Fläche) ist innerhalb der Vinylpolymer A enthaltenden Bereiche des Hybrid-Partikels im Wesentlichen gleich. Die betrachtete Dimension ist dabei im Allgemeinen mindestens das 8-fache der Größe der $SiO_2$-Partikel Das bedeutet, dass die überwiegende Zahl der $SiO_2$-Partikel innerhalb des Netzwerks keine Domänen bilden. Beispiele für solche Domänen sind z.B. die Bildung von Schalen aus $SiO_2$-Partikeln um einen Polymerkern der wenig bis keine $SiO_2$-Partikel enthält oder das Vorliegen von Ansammlungen von $SiO_2$-Partikeln, die von Polymer umgeben sind und zwischen denen keine oder nur wenige $SiO_2$-Partikel vorliegen. In solchen Ansammlungen können die einzelnen $SiO_2$-Partikel auch nicht-agglomeriert und/oder nicht-aggregiert vorliegen.

Vinylpolymer A ist auch ohne Vernetzung ein im Allgemeinen hochmolekulares Polymer. Die Netzbogenlänge von Vernetzungspunkt zu Vernetzungspunkt lässt sich über das Mengenverhältnis Vernetzermolekül zu Vinylmonomeren A steuern, die Kettenlänge über die Menge an Initiator. In der Regel gilt: Je weniger Vernetzer oder Initiator desto länger die Netzbögen oder die Polymerketten; je größer die Netzbögen, umso dehnbarer ist das Netzwerk.

Vinylpolymer B ist in der Lage die erfindungsgemäßen Hybrid-Partikel untereinander zu vernetzen. Es handelt sich dabei um eine chemische und/oder eine physikalische Vernetzung. Unter Vernetzung ist der Aufbau eines dreidimensionalen Netzwerkes zu verstehen.

Beispiele für chemische Vernetzung ist die Ausbildung von kovalenten, koordinativen oder ionischen Bindungen. Bei der physikalischen Vernetzung der Hybrid-Partikel erfolgt die Netzwerkbildung über Domänen innerhalb des Polymernetzwerks. Solche Domänen können kristalline oder amorphe Bereiche unterhalb der Glasübergangstemperatur sein. Bevorzugt ist es, wenn die Vernetzung über amorphe Domänen erfolgt. Eine physikalische Vernetzung kann z.B. dadurch erzeugt werden, dass die Hybrid-Partikel miteinander in unmittelbaren Kontakt gebracht werden (z.B. durch Entfernen des Wassers aus einer wässrigen Dispersion der Hybrid-Partikel), wobei sich die Polymerketten von Vinylpolymeren B verschiedener Hybrid-Partikel wechselseitig physikalisch durchdringen und so zu einer stabilen Verknüpfung führen. Im polymeren Werkstoff ist eine physikalische Vernetzung anhand einer kontinuierlichen Polymerphase zu erkennen, die im Wesentlichen frei von $SiO_2$-Partikeln ist, und die sich zwischen den $SiO_2$-Partikel enthaltenden Domänen von Polymer A befindet.

Die physikalische und die chemische Vernetzung der Hybrid-Partikel können kombiniert werden. Durch den Einbau reaktiver Gruppen in Vinylpolymer B kann z.B. nach der Bildung des Werkstoffs durch physikalische Vernetzung zusätzlich eine chemische Vernetzung durchgeführt werden. Beispiele für geeignete Comonomere in Vinylpolymer B sind N-Methylolacrylamid und N-Methylolmethacrylamid, die Kondensation vernetzen oder (Meth)acrylsäure, die über Salzbildung vernetzen kann.

Bevorzugt ist eine physikalische Vernetzung. Wenn eine chemische Vernetzung erfolgen soll, ist es bevorzugt, zuerst physikalisch zu vernetzen.

Vinylpolymer B ist im isolierten Hybrid-Partikel vorzugsweise nicht vernetzt, insbesondere nicht chemisch vernetzt. Vorzugsweise handelt es sich bei Vinylpolymer B um ein Polymer mit einem Molekulargewicht $M_w$ im Bereich von 10.000 bis 5.000.000 g/Mol, bevorzugt im Bereich von 50.000 bis 1.000.000 g/Mol. Ferner ist Vinylpolymer B bevorzugt zumindest zu> 30 Gew.-% hochmolekular und unvernetzt. Soweit Vinylpolymer B das Vinylpolymer A nicht durchdringt ist Vinylpolymer B im Wesentlichen frei von $SiO_2$-Partikeln.

Zur Einstellung des Molekulargewichts von Vinylpolymer A und B, insbesondere von Vinylpolymer B, können Regler wie Alkanthiole oder Ester der Thioglycolsäure wie z.B. 2-Ethylhexyl-thioglykolat eingesetzt werden.

In einer bevorzugten Ausführungsform betrifft die vorliegende Erfindung ein Hybrid-Partikel, enthaltend

a) ein Vinylpolymer A, das über reaktiv oberflächenmodifizierte kolloidale $SiO_2$-Partikel mit einer mittleren Partikelgröße von 1 bis 150 nm chemisch vernetzt ist, und

b) ein chemisch unvernetztes Vinylpolymer B, welches in der Lage ist, Hybrid-Partikel untereinander zu vernetzen, vorzugsweise physikalisch zu vernetzen.

Es ist bevorzugt, dass das Gewichtsverhältnis von Vinylpolymer A zu Vinylpolymer B im Bereich von 10 : 1- 1:2 liegt, vorzugsweise von 5:1-1:1, besonders bevorzugt im Bereich von 3:1-1,5:1.

Es ist bevorzugt, dass die Wasseraufnahme von Vinylpolymer B größer ist als die von Vinylpolymer A. Bevorzugt enthält Vinylpolymer B 0,1 - 5 Gew.-% hydrophile Gruppen wie z.B. Salze der Methacrylsäure und/oder Hydroxyethylacrylat und/oder haftvermittelnde Gruppen oder hydrophile Reste aus den wasserlöslichen Initiatoren wie-$SO_4H$ am $K_2S_2O_8$.

Die in dem erfindungsgemäßen Hybrid-Partikel enthaltenen $SiO_2$-Partikel weisen im Allgemeinen eine mittlere Partikelgröße von 1 bis 150 nm auf. Bevorzugte Untergrenzen für die mittlere Größe der $SiO_2$-Partikel sind 2 nm, 3 nm, 4 nm und 5 nm. Bevorzugte Obergrenzen sind 100 nm, 75 nm, 50 nm, 30 nm und 25 nm.

Die $SiO_2$-Partikelgröße kann in Lösung mittels dynamischer Lichtstreuung auf einem "Dynamic Light Scattering Particle Size Analyzer LB-550" der Firma Horiba bei einer Konzentration von maximal 10 Gew.-% Partikeln erfolgen, wobei die Dispersion maximal eine dynamische Viskosität von 3 mPas bei 25 °C aufweisen darf. Als Teilchengröße wird der Median (D50-Wert) der Partikelgrößenverteilung angeben.

Im Feststoff kann die SiO2-Partikelgröße per Transmissionselektronenmikroskopie bestimmt werden. Dazu werden mindestens 100 Partikel ausgemessen und eine Partikelgrößenverteilung gebildet.

Die SiO2-Partikel liegen in kolloidaler Form vor, d.h. dass das nanoskalige Siliciumdioxid im Allgemeinen zu mindestens 50 % aus vereinzelten, nicht aggregierten und nicht agglomerierten Primärpartikeln vorliegt. Die Primärpartikel weisen im Gegensatz zu Aggregaten und Agglomeraten sphärische Form auf. Weitere bevorzugte Untergrenzen sind 70 %, 80 %, 90 %, 95 % und 98 %. Bei diesen Prozentangaben handelt es sich um Gew.-%. Somit stellt die Erfindung bevorzugt ein Hybrid-Partikel zur Verfügung, welches im Wesentlichen frei ist von Aggregaten und/oder Agglomeraten der SiO2-Partikel.

Die SiO2-Partikel können oberflächenmodifiziert sein oder nicht oberflächenmodifiziert. Bevorzugt sind SiO2-Partikel, die oberflächenmodifiziert sind, z.B. durch reaktive oder durch unreaktive Gruppen. Besonders bevorzugt sind oberflächenfunktionalisierte SiO2-Partikel die auf der Oberfläche als reaktive Gruppen polymerisierbare Gruppen tragen. Die polymerisierbaren Gruppen auf der Oberfläche der SiO2-Partikel können insbesondere Vinylgruppen, Allylgruppen, Hexenylgruppen, Acryloylgruppen und/oder Methacryloylgruppen umfassen.

Für die Oberflächenmodifizierung können die entsprechenden Gruppen beispielsweise durch eine geeignete Silanisierung chemisch an die Oberfläche der SiO2-Partikel angebunden werden. Geeignete Silane sind bevorzugt ausgewählt aus der Gruppe der bestehend aus Organosilanen der Formel $R^1_aSiX_{4-a}$, Organosilanen der Formel $(R^1_3Si)_bNR^1_{3-b}$ und Organosiloxanen der Formel $R^1_nSiO_{(4-n)/2}$, worin jedes $R^1$ unabhängig voneinander ausgewählt ist aus Kohlenwasserstoffresten mit 1 bis 18 Kohlenstoffatomen oder organofunktionellen Kohlenwasserstoffresten mit 1 bis 18 Kohlenstoffatomen oder ein Wasserstoffatom ist, jedes X unabhängig voneinander auswählt eine hydrolysierbare Gruppe ist, a = 0, 1, 2 oder 3, b = 1, 2 oder 3 und n eine Zahl von 2 bis einschließlich 3 ist. Beispiele für hydrolysierbare Gruppen sind Halogen-, Alkoxy-, Alkenoxy-, Acyloxy-, Oximino- und Aminoxygruppen.

Beispiele für funktionelle, nicht hydrolysierbare Gruppen sind Vinyl-, Aminopropyl-, Chlorpropyl- Aminoethylaminopropyl-, Glycidyloxypropyl-, Mercaptopropyl- oder Methacryloxypropyl-Gruppen. Geeignet sind beispielsweise Alkoxysilane, Silazane und Halogensilane. Beispielhaft genannte Silane mit denen polymerisierbare Gruppen an die Oberfläche der SiO2-Partikel gebunden werden können seien Vinyltrimethoxysilan, Vinyltriethoxysilan, Methylvinyldimethoxysilan, Methylvinyldiethoxysilan, Vinyldimethylmethoxysilan, Vinyldimethylethoxysilan, Divinyldimethoxysilan, Divinyldiethoxysilan, Vinyltriacetoxysilan, Vinyltrichlorsilan, Methylvinyldichlorsilan, Dimethylvinylchlorsilan, Divinyldichlorsilan, Vinyltris(2-methoxyethoxy)silan, Hexenyltrimethoxysilan, 3-Methacryloxypropyltrimethoxysilan, 3-Methacryloxypropyltriethoxysilan, 3-Methacryloxypropyltriacetoxysilan, Methacryloxymethyltrimethoxysilan, Methacryloxymethyltriethoxysilan, (Methacryloxymethyl)methyldimethoxysilan, (Methacryloxymethyl)-methyldiethoxysilan, Acryloxypropyltrimethoxysilan, Acryloxypropyltriethoxysilan, 3-Methacryloxypropyltrichlorsilan, 3-Methacryloxypropyldimethylchlorsilan, Vinylbenzylethylendiaminpropyltrimethoxysilan, Vinylbenzylethylendiaminpropyltrimethoxysilan-Hydrochlorid, Allylethylendiaminpropyltrimethoxysilan, Allylethylendiaminpropyltriethoxysilan, Allyltrichlorsilan, Allylmethyldichlorsilan, Allyldimethylchlorsilan, Allyltrimethoxysilan, Allyltriethoxysilan, Allylmethyldimethoxysilan, Allylmethyldiethoxysilan, Allyldimethylmethoxysilan, Allyldimethylethoxysilan, Divinyltetramethyldisilazan, Divinyltetramethyldisiloxan, Trimethyltrivinylcyclotrisiloxan, Tetramethyltetravinylcyclotetrasiloxan, Pentamethylpentavinylcyclopentasiloxan und Hexamethylhexavinylcyclohexasiloxan. Als Beispiel für Silane mit denen die Oberfläche modifiziert werden kann seien genannt Phenyltrimethoxysilan, Phenyltriethoxysilan, Propyltrimethoxysilan, Propyltriethoxysilan, 3-Glycidyloxypropyltrimethoxysilane, Hexamethyldisiloxan, Hexamethyldisilazan, 3-Aminopropyltrimethoxysilan, 3-Aminopropylmethyldiethoxysilan, 3-Aminopropyldimethylmethoxysilan, Chlorpropyltrimethoxysilan, Chlortrimethylsilan, Dimethylchlorsilan. Methyltrimethoxysilan, Trimethylmethoxysilan, Methylhydrogendimethoxysilan, Dimethyldimethoxysilan, Ethyltrimethoxysilan, Ethyltriacetoxysilan, Propyltrimethoxysilan, Diisopropyldimethoxysilan, Diisobutyldimethoxysilan, Chlorpropyltrimethoxysilan, Chlorpropylmethyldimethoxysilan, Chlorisobutylmethyldimethoxysilan, Trifluorpropyltrimethoxysilan, Trifluorpropylmethyldimethoxysilan, iso-Butyltrimethoxysilan, n-Butyltrimethoxysilan, n-Butylmethyldimethoxysilan, Phenyltrimethoxysilan, Phenyltrimethoxysilan, Phenylmethyldimethoxysilan, Triphenylsilanol, n-Hexyltrimethoxysilan, n-Octyltrimethoxysilan, iso-Octyltrimethoxysilan, Decyltrimethoxysilan, Hexadecyltrimethoxysilan, Cyclohexylmethyldimethoxysilan, Cyclohexylethyldimethoxysilan, Dicyclopentyldimethoxysilan, tert-Butylethyldimethoxysilan, tert-Butylpropyldimethoxysilan, Dicyclohexyldimethoxysilan, Mercaptopropyltrimethoxysilan, Bis(triethoxysilylpropyl)disulfid, Bis(triethoxysilylpropyl)-tetrasulfid, Mercaptopropylmethyldimethoxysilan, Aminopropyltrimethoxysilan, m-Aminophenyltrimethoxysilan, Aminopropylmethyldiethoxysilan, Phenylaminopropyltrimethoxysilan, Aminoethylaminopropyltrimethoxysilan, Aminoethylaminopropylmethyldimethoxysilan, Glycidoxypropyltrimethoxysilan, Glycidoxypropylmethyldimethoxysilan, Epoxycyclohexylethyltrimethoxysilan.

Die Herstellung silanisierter $SiO_2$-Partikel mit polymerisierbaren Gruppen an der Oberfläche ist im Stand der Technik grundsätzlich bereits bekannt. Beispielsweise können $SiO_2$-Partikel aus Kieselsolen ausgefällt und anschließend mit Organosilanen wie bspw. Vinylsilanen silanisiert werden. Eine solche Herstellung über Fällungskieselsäuren ist z.B. in EP 0 926 170 B1 beschrieben. Weitere Beispiele finden sich in EP 1 366 112, EP 2 025 722, EP 08007625, EP 08007580, EP 08007581, und EP 08007582. Eine andere Möglichkeit ist beschrieben in J. Colloid Interface Sci 26:62 (1968). Es handelt sich hier um die sogenannte Stöber-Synthese solcher Nanopartikel.

Die polymerisierbaren Gruppen auf der Oberfläche der $SiO_2$-Partikel können insbesondere Vinylgruppen, Allylgruppen, Hexenylgruppen, Acryloylgruppen und/oder Methacryloylgruppen umfassen.

Durch polymerisierbare Gruppen oberflächenfunktionalisierte $SiO_2$-Partikel wirken bei der Herstellung des Vinylpolymers A als Vernetzer und führen eine chemische Vernetzung herbei.

Im Rahmen der Erfindung können auch $SiO_2$-Partikel verwendet werden, die keine Vernetzung herbeiführen, beispielsweise mit unreaktiven Gruppen oberflächenmodifizierte $SiO_2$-Partikel. In diesen Fällen ist es bevorzugt, bei der Herstellung von Vinylpolymer A herkömmliche Vernetzermoleküle einzusetzen.

Bei einer weiteren Variante der Erfindung sind auf der Oberfläche der $SiO_2$-Partikel wenigstens zwei verschiedene polymerisierbare Gruppen angeordnet. Die verschiedenen polymerisierbaren Gruppen können vorzugsweise Methacryloyl-, Acryloyl-, Styryl- oder Itaconylgruppen einerseits und Vinyl-, Allyl-, Alkenyl- oder Crotonylgruppen andererseits umfassen. Weiter können sie insbesondere Acryloyl- und/oder Methacryloylgruppen einerseits und Vinyl-, Hexenyl- und/ oder Allylgruppen andererseits umfassen.

Zur Herstellung einer solchen dualen Oberflächenmodifizierung können die entsprechenden Silane bzw. Siloxane bei der Silanisierung der $SiO_2$-Partikel in Mischung oder nacheinander zur Reaktion gebracht werden.

Die Oberflächenbelegung der $SiO_2$-Partikel mit polymerisierbaren Gruppen liegt bevorzugt zwischen 0,01 und 6 Gruppen/$nm^2$, weiter vorzugsweise zwischen 0,02 und 4 Gruppen/$nm^2$.

Durch reaktive, z.B. polymerisierbare Gruppen oberflächenfunktionalisierte $SiO_2$-Partikel können bei der Herstellung des Vinylpolymers A als Vernetzer wirken und eine chemische Vernetzung herbeiführen. Im Rahmen der Erfindung können auch $SiO_2$-Partikel verwendet werden, die keine Vernetzung herbeiführen, beispielsweise unmodifizierte $SiO_2$-Partikel oder mit unreaktiven Gruppen oberflächenmodifizierte $SiO_2$-Partikel. In diesen Fällen ist es bevorzugt, bei der Herstellung von Vinylpolymer A herkömmliche Vernetzer einzusetzen.

Über die polymerisierbaren Gruppen hinaus können die $SiO_2$-Partikel auch Gruppen tragen, die nicht in einer Polymerisation reagieren. Insbesondere sollten die $SiO_2$-Partikel so modifiziert sein, dass in einem 2-Phasen-System wie z.B. Butylacrylat-Wasser die Partikel in der Butylacrylat-Phase verbleiben und nicht agglomerieren.

Die Oberfläche der $SiO_2$-Partikel kann für sphärische Partikel aus der Teilchengröße berechnet werden. Für die Berechnung wird der Median der Partikelgrößenverteilung (D50) heran gezogen. Die spezifische Oberfläche ($A_0$) lässt sich dann mit Hilfe der Dichte des Partikels (ρ) berechnen:

$$A_0 = 6 \,/\, (\rho \times D50)$$

Die Dichte von kolloidalem Siliziumdioxid beträgt 2,1 g/$cm^3$.

Die Zahl der reaktiven Gruppen pro Oberflächeneinheit ($n_R^A$) ergibt sich aus dem Quotienten der Zahl reaktiver Gruppen ($n_R^M$) pro Masse dividiert durch die spezifische Oberfläche:

$$n_R = (n_R^M \,/\, A_0)$$

Die Zahl reaktiver Gruppen pro Masse $n_R^M$ kann über geeignete analytische Methoden bestimmt werden. Werden Silane des Typs Alkoxy, Acyloxy, Acetoxy, Alkenoxy oder Oximosilane eingesetzt, um die reaktiven Gruppen auf die Oberfläche zu bringen, kann von einer vollständigen Hydrolyse des Silans ausgegangen werden. D.h. alle eingesetzten Gruppen finden sich auf der Oberfläche der $SiO_2$-Partikel wieder.

Die Bestimmung der Anzahl der polymerisationsfähigen Gruppen auf der $SiO_2$-Partikeloberfläche kann auch durch NMR Spektroskopie oder mittels DSC (differential scanning calorimetry) erfolgen. Diese Verfahren können insbesondere dann zur Anwendung kommen, wenn geeignete analytische Methoden zur Bestimmung reaktiver Gruppen (bspw. Iodzahlbestimmung bei Vinylgruppen) nicht zur Verfügung stehen. Bei der DSC wird die Polymerisationswärme als Maß für die Zahl der polymerisationsfähigen Gruppen auf der $SiO_2$-Partikeloberfläch gemessen. Bei dieser DSC Bestimmung wird eine definierte Menge der oberflächenmodifizierten $SiO_2$-Partikel mit einer standardisierten Peroxidlösung versetzt und die Reaktionswärme gemessen. Das Verfahren ist bspw. beschrieben in DE 36 32 215 A1.

Die erfindungsgemäßen Hybrid-Partikel weisen eine mittlere Größe im Allgemeinen zwischen 100 und 5.000 nm, vorzugsweise 150 bis 2.000 nm, weiter bevorzugt zwischen 200 und 1.500 nm auf und eine im Wesentlichen sphärische Form. Die Hybrid-Partikel weisen bevorzugt eine Partikelgrößenverteilung mit einem D50/(D90-D10) von> 2 auf.

Die bevorzugten Hybrid-Partikel weisen einen Zentralbereich auf, der im Wesentlichen aus Vinylpolymer A und $SiO_2$-Partikeln besteht. Dabei sind die $SiO_2$-Partikel im Wesentlichen homogen in Vinylpolymer A verteilt. Die Außenbereiche der bevorzugten Hybrid-Partikel bestehen im Wesentlichen aus Vinylpolymer B und sind im Wesentlichen frei von $SiO_2$-Partikeln. Dabei kann Vinylpolymer B z.B. eine Schale um Vinylpolymer A bilden oder auch in einer anderen Form, z.B. einer "Himbeer"-Struktur, um Vinylpolymer A angeordnet sein. Vinylpolymer B kann Vinylpolymer A teilweise durchdringen, so dass Bereiche vorliegen, insbesondere im Randbereich des durch Vinylpolymer A gebildeten Zentralbereichs, in denen beide Vinylpolymere nebeneinander vorliegen. Bei einer anschließenden (vorzugsweise physikalischen) Vernetzung der Hybrid-Partikel über Vinylpolymer B entsteht auf diese Weise ein besonders fester Verbund.

Ein Hybrid-Partikel enthält im Allgemeinen mindestens 10 $SiO_2$-Partikel, vorzugsweise mindestens 25 $SiO_2$-Partikel, besonders bevorzugt 50 $SiO_2$-Partikel. Der Gehalt an $SiO_2$-Partikeln beträgt 1 bis 40 Gew.-%, vorzugsweise 1 bis 30 Gew.-%, weiter vorzugsweise 1 bis 15 Gew.-%, besonders bevorzugt 2 bis 8 Gew.-%.

Neben den oben genannten Bestandteilen kann das Hybrid-Partikel auch weitere Komponenten enthalten, z.B. organisch lösliche Farbstoffe, Lösungsmittel, Verlaufsmittel, Haftvermittler, Tackyfier, Trennmittel, Gleitmittel, Antioxidationsmittel oder UV-Schutzmittel. Bevorzugt in Konzentrationen zwischen 0 und 5 Gew.-%, besonders bevorzugt 0,01 bis 1 Gew.-%, bezogen auf das Gesamtgewicht des Hybrid-Partikels.

Die Hybrid-Partikel verfügen über besonders gute mechanische Eigenschaften. Neben einer besonders hohen Zugfestigkeit und Bruchdehnung haben die Hybrid-Partikel auch ein hervorragendes Rückstellvermögen. Des Weiteren lassen sich die Eigenschaften der Hydrid-Partikel über einen breiten Bereich einstellen.

Eine Applikationsform der Hybrid-Partikel ist die wässrige Dispersion. Diese Dispersion ist ebenfalls Gegenstand der vorliegenden Erfindung. Üblich sind Dispersionen mit einem Gehalt an Hybrid-Partikeln von 20-70 Gew.-%, bevorzugt 30- 65 Gew.-%, besonders bevorzugt 40- 60 Gew.-%, jeweils bezogen auf das Gesamtgewicht der Dispersion. In der Regel enthält die Dispersion Emulgatoren, z.B. anionische, kationische, amphotere oder nicht-ionische Emulgatoren. Bevorzugt sind anionische und nicht-ionische Emulgatoren, besonders bevorzugt anionische Emulgatoren. Anionische Emulgatoren beinhalten die Natrium-, Kalium- und Ammoniumsalze von Fettsäuren und Sulfonsäuren; die Alkalisalze von $C_{12}$-$C_{16}$-Alkylsulfaten; ethoxylierte und sulfatierte oder sulfonierte Fettalkohole; Alkylphenole und Sulfodicarboxylatester. Nicht-ionische Emulgatoren beinhalten ethoxylierte Fettalkohole und Alkylphenole mit 2-150 Ethylenoxideinheiten pro Molekül. Kationische Emulgatoren beinhalten Ammonium-, Phosphonium-, und Sulfoniumverbindungen mit einem hydrophoben Rest der z.B. aus einer oder mehrerer langer Alkylketten besteht. Bevorzugte Emulgatoren sind Alkylbenzolsulfonate, Di-alkylsulfosuccinate, $C_{14}$-$C_{16}$-Alkylsulfonate-Na-Salz, Dodecylsulfat-Na-Salz. Besonders gut geeignet sind die durch Oxethylierung und Sulfatierung von Alkylphenolen hergestellten Emulgatoren. Beispiele sind die Derivate des Nonylphenol oder Triisobutylphenol mit 5-10 Ethylenoxideinheiten, wie z.B. Triisobutylphenol 6-fach ethoxyliert, sulfatiertes Na-Salz. Daneben kann die Dispersion noch Schutzkolloide, Farbstoffe, Trennmittel, Gleitmittel, Stabilisatoren (Sauerstoff, UV), Lösungsmittel, Verlaufsmittel, Haftvermittler, Tackyfier und Konservierungsmittel enthalten.

Eine weitere Anwendung der Hybrid-Partikel ist als thermoplastisch verarbeitbarer Elastomere, sog. TPE. Die Hybrid-Partikel können z.B. in einem Spritzgießverfahren zu elastomeren Körpern verarbeitet werden. Dabei zeichnen sich die gewonnen Formkörper neben guten mechanischen Eigenschaften auch durch eine besonders angenehme Haptik aus. Ein weiterer Vorteil von TPEs ist, dass diese recyclebar sind.

Eine weitere Anwendung der Hydrid-Partikel ist als Beschichtungsmittel. Dabei bilden die Hydrid-Partikel einen Film, der neben (Farb-)Pigmenten auch typische Farb- und Lackadditive wie z.B. UV- und Sauerstoffstabilisatoren, Verlaufsmittel, Entlüftungsmittel, Haftvermittler und Tenside.

Eine weitere Anwendung der Hybrid-Partikel sind Klebstoffe. Dabei können die Hydrid-Partikel als Bindemittel fungieren und neben anorganischen Füllstoffen auch Haftvermittler und weitere typische Klebstoffadditive enthalten.

Eine weitere Anwendung der Hybrid-Partikel liegt in Beschichtungsformulierungen auf Basis von (Meth)acrylaten zur Verbesserung der Zähigkeit, Haptik und der Gleit- und Reibeigenschaften.

In Vergussmassen, z.B. epoxy- oder cyanatesterbasiert, können die Hybrid-Partikel die mechanischen Eigenschaften verbessern.

Eine weitere Anwendung der Hybrid-Partikel sind Dichtstoffe für den Baubereich. Dabei können neben den Hybrid-Partikeln anorganische Füllstoffe, Pigmente, weitere Polymere, UV- und Sauerstoffstabilisatoren, Haftvermittler und weitere typische Dichtstoffkomponenten zum Einsatz kommen.

Eine weitere Anwendung der Hybrid-Partikel ist als Dichtungsmaterial. Neben mechanischen Eigenschaften können die Hybrid-Partikel eine gute Öl- und Lösungsmittelbeständigkeit aufweisen.

Herstellverfahren

Die erfindungsgemäßen Hybrid-Partikel können beispielsweise durch ein zweistufiges Polymerisationsverfahren hergestellt werden, das ebenfalls Gegenstand der vorliegenden Erfindung ist. Bevorzugt ist ein Herstellverfahren, bei dem in einer ersten Polymerisationsstufe eines oder mehrere Vinylmonomere in Gegen-

wart der nanoskaligen $SiO_2$-Partikel in einer wasserunlöslichen Phase polymerisiert. Die $SiO_2$-Partikel liegen in der wasserunlöslichen Phase dispergiert vor. Die in der Polymerisation eingesetzte wasserunlösliche Phase kann neben Vinylmonomeren und $SiO_2$-Partikeln optional auch organische Lösungsmittel und weitere Komponenten wie Initiatoren oder Emulgatoren enthalten. In einer Ausführungsform besteht die wasserunlösliche Phase im Wesentlichen aus Vinylmonomer oder aus einer Mischung von Vinylmonomer und organischem Lösungsmittel. Bevorzugt besteht die wasserunlösliche Phase im Wesentlichen aus Vinylmonomer.

In einer zweiten Polymerisationsstufe werden Vinylmonomere in wässrigem Medium Phase in Gegenwart des in der ersten Polymerisationsstufe erhaltenen Polymeren polymerisiert. Das Polymerisationsgemisch kann neben dem Polymerisat der ersten Polymerisationsstufe und Vinylmonomer der zweiten Stufe optional auch weitere Komponenten wie organische Lösungsmittel, Initiatoren oder Emulgatoren enthalten.

Beide Polymerisationsstufen werden in einem zweiphasigen System aus Wasser und einer wasserunlöslichen Phase durchgeführt, bevorzugt werden dazu Emulgatoren verwendet. Die Polymerisationen verlaufen vorzugsweise nach einem radikalischen Mechanismus, optional können daher auch entsprechende Initiatoren verwendet werden. Zur Einstellung des Molekulargewichts in Polymerisationsschritt 1 und 2, insbesondere in Polymerisationsschritt 2, können Regler wie Alkanthiole oder Ester der Thioglycolsäure wie z.B. 2-Ethylhexylthioglykolat eingesetzt werden.

Als organische Lösungsmittel kommen z.B. Ketone, Aldehyde, Alkohole, Ester, Ether, aliphatische, aromatische und halogenierte Kohlenwasserstoffe sowie Weichmacher in Frage. In einer Ausführungsform ist das Lösungsmittel so ausgewählt, dass es einfach am Ende des Verfahrens einfach entfernt werden kann. Bevorzugt sind Methanol, Ethanol, Isopropanol, Toluol, Xylol, Pentan, Hexan, Heptan, Oktan, Essigsäureethylester, Essigsäureisopropylester, Essigsäurebutylester, Aceton, Methylethylketon, Methylisobutylketon und Methoxypropanol. In einer weiteren Ausführungsform ist das Lösungsmittel ein langkettiger Alkohol, der in dem Hybrid-Partikel verbleiben kann.

Die erste Polymerisationsstufe ist vorzugsweise eine Suspensionspolymerisation, besonders bevorzugt eine Mikrosuspension. Beispielsweise können die Vinylmonomere, ein monomer-löslicher Initiator und die $SiO_2$-Partikel in Wasser suspendiert und polymerisiert werden. Die Emulgierung erfolgt vorzugsweise unter Verwendung eines Emulgators und unter Einwirkung hoher Scherkräfte, beispielsweise durch einen Hochgeschwindigkeits-Mischer. Nach der erfolgten Emulgierung kann unvermindert oder bevorzugt langsamer weiter gerührt werden. Die Polymerisation wird im Allgemeinen bei einer Temperatur von 20 bis 150 °C, bevorzugt im Bereich von 30- 100 °C, besonders bevorzugt zwischen 50 und 90 °C durchgeführt, beispielsweise als Zulaufpolymerisation oder als Batch-Polymerisation. Bevorzugt ist eine Batch-Polymerisation.

Es ist bevorzugt, dass die $SiO_2$-Partikel vor und während der Polymerisation in einer wasserunlöslichen Phase, z.B. organisches Lösemittel und/oder Vinylmonomer, dispergiert vorliegen, wobei es besonders bevorzugt ist, dass die $SiO_2$-Partikel in Vinylmonomer dispergiert vorliegen.

In einer bevorzugten Ausführungsform wird eine wasserunlöslichen Phase, aus den Vinylmonomeren der ersten Stufe, den kolloidalen $SiO_2$-Partikeln und einem in diesen Monomeren löslichen Initiator, vorzugsweise mit Hilfe eines Emulgators, unter Einwirkung hoher Scherkräfte mit Wasser zu einer feinteiligen Öl-in-Wasser-Emulsion emulgiert. Die Größe der Öltröpfchen liegt im Allgemeinen im Bereich von 100 bis 5.000 nm, vorzugsweise von 150 bis 2.000 nm, besonders bevorzugt zwischen 200 und 1.500 nm, beispielsweise ca. 0,5 $\mu$m. Dabei befinden sich die $SiO_2$-Partikel in der wasserunlöslichen Phase. Die so erhaltene Emulsion wird auf Polymerisationstemperatur gebracht und unter Einwirkung nur geringer Scherkräfte polymerisiert. Die Polymerisationstemperatur liegt dabei im Allgemeinen im Bereich von 20 bis 150 °C, bevorzugt im Bereich von 30- 100 °C, besonders bevorzugt zwischen 50 und 90 °C.

Dabei hängt die Wahl des monomer-löslichen Initiators von der gewählten Polymerisationstemperatur und den eingesetzten Monomeren ab. Bevorzugt sind thermisch zerfallende Initiatoren wie organische Peroxide und Azoverbindungen, z.B. Perketale, Peroxide und Perester:

> t-Butylperoxypivalat $\tau_{1/2}$= 1 h bei 74 °C
> t-Butylperoxy-2-ethylhexanoat $\tau_{1/2}$= 1 h bei 92 °C
> Dilauroylperoxid $\tau_{1/2}$= 1 h bei 80 °C
> Beispiel für eine Azoverbindung ist Azo-bis-isobutyronitril (AIBN).

Bevorzugt ist z.B. die Polymerisation der 1. Stufe mit Dilauroylperoxid als Initiator und (Meth)acrylsäureestern bei ca. 80 °C. Insbesondere beim Einsatz von gasförmigen Monomeren wird unter erhöhtem Druck polymerisiert.

Als Emulgatoren kommen z.B. anionische, kationische, amphotere oder nicht-ionische Emulgatoren in Frage. Bevorzugt sind anionische und nicht-ionische Emulgatoren, besonders bevorzugt anionische Emulgatoren. Anionische Emulgatoren beinhalten die Natrium-, Kalium- und Ammoniumsalze von Fettsäuren und Sulfonsäuren; die Alkalisalze von $C_{12}$-$C_{16}$-Alkylsulfaten; ethoxylierte und sulfatierte oder sulfonierte Fettalkohole; Alkylphenole und Sulfodicarboxylatester. Nicht-ionische Emulgatoren beinhalten ethoxylierte Fettalkohole und Alkylphenole mit 2-150 Ethylenoxideinheiten pro Molekül. Kationische Emulgatoren beinhalten Ammonium-, Phosphonium-, und Sulfoniumverbindungen mit einem hydrophoben Rest der z.B. aus einer oder mehrerer langer Alkylketten besteht. Bevorzugte Emulgatoren sind Al-

kylbenzolsulfonate, Di-alkylsulfosuccinate, $C_{14}$-$C_{16}$-Alkylsulfonate-Na-Salz, Dodecylsulfat-Na-Salz. Besonders gut geeignet sind die durch Oxethylierung und Sulfatierung von Alkylphenolen hergestellten Emulgatoren. Beispiele sind die Derivate des Nonylphenol oder Triisobutylphenol mit 5-10 Ethylenoxideinheiten, wie z.B. Triisobutylphenol 6-fach ethoxyliert, sulfatiertes Na-Salz. Die Emulgatoren werden typischerweise in Konzentrationen zwischen 0,02 und 5 Gew.-%, bevorzugt 0,1 bis 2 Gew.-% bezogen auf die Vinylmonomere eingesetzt.

In der ersten Polymerisationsstufe wird im Allgemeinen eine Suspension erhalten, welche in Wasser suspendierte Polymerpartikel und darin enthaltene $SiO_2$-Partikel enthält. Das in der ersten Polymerisationsstufe erhaltene Vinylpolymer wird dann in der zweiten Polymerisationsstufe eingesetzt. Das in der ersten Stufe erhaltene Polymerisationsgemisch wird dabei bevorzugt direkt weiterverwendet, z.B. indem die Komponenten der zweiten Polymerisationsstufe direkt in den Reaktionsbehälter gegeben werden, in dem die sich das Polymerisationsgemisch der ersten Polymerisationsstufe befindet.

In einer Ausführungsform bildet das Polymer der ersten Polymerisationsstufe dabei eine wasserunlösliche Phase, diese kann neben Monomer der zweiten Stufe optional auch organische Lösungsmittel und weitere Komponenten wie Initiatoren oder Emulgatoren enthalten.

In einer bevorzugten Ausführungform ist die zweite Polymerisationsstufe eine Emulsionspolymerisation. Beispielsweise kann eine wässrige Emulsion, welche die Vinylmonomere, einen Emulgator und optional einen wasserlöslichen Initiator enthält, zu dem in der ersten Polymerisationsstufe erhaltenen Polymer gegeben werden. Die Polymerisation kann als Zulaufpolymerisation (semi-kontinuierliche Polymerisation) erfolgen oder als Batch-Polymerisation, wobei eine ein- oder mehrfache batchweise Zugabe möglich ist. Bevorzugt ist eine Zulaufpolymerisation.

In einer weiteren Ausführungsform wird zu der im ersten Polymerisationsschritt erhaltenen Suspension bei Polymerisationstemperatur eine Emulsion gegeben, die aus den Vinylmonomeren, Wasser, wasserlöslichem Initiator und Emulgator unter Einwirkung hoher Scherkräfte hergestellt werden kann. Der Zulauf wird bevorzugt so gesteuert, dass sich jeweils nur geringe Mengen Vinylmonomer im Reaktionsgemisch befinden, d.h. als sog. Zulaufpolymerisation.

In einer weiteren Ausführungsform werden die Vinylmonomere der zweiten Polymerisationsstufe ohne weiteren Initiator zu dem im Reaktionsgefäß befindlichen Polymerisationsgemisch aus der ersten Polymerisationsstufe dosiert und in Gegenwart von noch vorhandenem Rest an Initiator aus der ersten Polymerisationsstufe polymerisiert. Auch kann es von Vorteil sein, die Zugabe der Vinylmonomeren der zweiten Polymerisationsstufe bereits zu starten, wenn die Vinylmonomere der ersten Polymerisationsstufe erst zu 80 bis 95 Gew.-% polymerisiert sind.

Wird für die zweite Polymerisationsstufe Initiator zugesetzt, wird dazu im Allgemeinen ein wasserlöslicher Initiator verwendet. Wasserlösliche Initiatoren sind z.B. Alkalipersulfate, Ammoniumpersulfat und Wasserstoffperoxid. Bevorzugt ist die Nutzung von Peroxodisulfaten als Initiator, z.B. Kaliumperoxodisulfat. Eine weitere Möglichkeit sind Redox-Initiatoren. Diese enthalten neben einer oxidierenden Komponente wie z.B. Ammoniumperoxodisulfat eine reduzierende Komponente wie z.B. Bisulfit, Rongalit oder tertiäre aromatische Amine. Die Initiatormenge liegt vorzugsweise im Bereich von 0,01- 2 Gew.-% bezogen auf die Vinylmonomeren.

Als Emulgatoren für die zweite Polymerisationsstufe kommen z.B. anionische, kationische, amphotere oder nicht-ionische Emulgatoren in Frage. Bevorzugt sind anionische und nicht-ionische Emulgatoren, besonders bevorzugt anionische Emulgatoren. Werden bei der ersten Polymerisationsstufe anionische oder nicht-ionische Emulgatoren eingesetzt, ist es besonders bevorzugt, bei der zweiten Polymerisationsstufe auch anionische oder nicht-ionische Emulgatoren einzusetzen. Es ist weiterhin bevorzugt die gleiche Emulgatorklasse wie bei der ersten Polymerisationsstufe einzusetzen. Bevorzugte Emulgatoren sind Alkylbenzolsulfonate, Di-alkylsulfosuccinate, $C_{14}$-Alkylsulfonate-Na-Salz, Dodecylsulfat-Na-Salz. Besonders gut geeignet sind die durch Oxethylierung und Sulfatierung von Alkylphenolen hergestellten Emulgatoren. Beispiele sind die Derivate des Nonylphenol oder Triisobutylphenol mit 5- 10 Ethylenoxideinheiten, wie z.B. Triisobutylphenol 6-fach ethoxyliert, sulfatiertes Na-Salz. Die Emulgatoren werden typischerweise in Konzentrationen zwischen 0,02 und 5 Gew.-%, bevorzugt zwischen 0,1 und 2 Gew.-%, bezogen auf die Vinylmonomere eingesetzt.

Werden bei der ersten Polymerisationsstufe anionische oder nicht-ionische Emulgatoren eingesetzt, ist es besonders bevorzugt, bei der zweiten Polymerisationsstufe auch anionische oder nicht-ionische Emulgatoren einzusetzen. Es ist besonders bevorzugt in der zweiten Polymerisationsstufe die gleiche Emulgatorklasse wie inbei der ersten Polymerisationsstufe einzusetzen, z.B. in beiden Stufen anionische Emulgatoren.

Die Polymerisation der zweiten Polymerisationsstufe wird im Allgemeinen bei einer Temperatur von 20 bis 150 °C, bevorzugt im Bereich von 30- 100 °C, besonders bevorzugt zwischen 50 und 90°C durchgeführt. Insbesondere beim Einsatz von gasförmigen Monomeren wird unter erhöhtem Druck polymerisiert.

Dispersion

Das erfindungsgemäße Verfahren ist geeignet, eine wässrige Dispersion der Hybrid-Partikel zu erhalten. Vorteilhafterweise enthalten die erhaltenen Dispersionen wenn überhaupt, nur geringe Mengen an Koagulat, bevorzugt weniger als 1 Gew.-%, besonders bevorzugt unter 0,1 Gew.-%. Optional kann die durch das erfindungsgemäße Verfahren erhaltene Dispersion anschließend gängigen Reinigungsschritten, z.B. einer Filtration, unterzogen werden. Die vorliegende Erfindung betrifft somit weiterhin eine wässrige Dispersion, enthaltend 20-70 Gew.-%, vorzugsweise 30- 65 Gew.-%, besonders bevorzugt 40- 60 Gew.-% erfindungsgemäße Hybrid-Partikel.

Die erfindungsgemäße Dispersion kann weitere Komponenten enthalten, z.B. Polymere oder Tenside, Emulgatoren, Pigmente, anorganische Füllstoffe, Farbstoffe, Stabilisatoren (UV, Sauerstoff), Verlaufsmittel, Entlüftungsmittel, Konservierungsmittel, Schutzkolloide, und weiter typische Additive wie sie bei Dispersionen zum Einsatz kommen. Diese können im erfindungsgemäßen Herstellverfahren oder anschließend, insbesondere nach einem etwaigen Reinigungsschritt zugegeben werden.

Die erfindungsgemäße Dispersion weist verschiedene vorteilhafte Eigenschaften auf, z.B. eine günstige Filmbildetemperatur, diese liegt im Allgemeinen im Bereich von unter 30 °C, vorzugsweise unter 20 °C.

Die erfindungsgemäße Dispersion eignet sich für verschiedene Anwendungen, z.B. als Kleber, beispielsweise von Stahl, Aluminium, Glas, Kunststoffen (PVC, PE, PP, Polyurethane), Baustoffen (Rigipsplatten), Steinen, Leder, Kautschuken, Glasfaserkompositen, Kohlefaserkompositen oder als Dichtstoff, z.B. in der Bauindustrie oder im Heimwerkerbereich. Eine weitere Anwendung sind Beschichtungen.

## Polymerer Werkstoff

Die vorliegende Erfindung betrifft weiterhin einen polymeren Werkstoff, erhältlich durch Abtrennen des Wassers aus der erfindungsgemäßen Dispersion. Das ist in einfacher Form durch Eintrocknen der Dispersion möglich, z.B. durch Trocknen bei Raumtemperatur oder einer erhöhten Temperatur. Bevorzugt ist es zwischen 20 und 80 °C zu trocknen. Restwasser kann z.B. durch Tempern entfernt werden, z.B. bei Temperaturen von 80 bis 140 °C, bevorzugt bei 100- 130 °C. Es kann auch unter reduziertem Druck getrocknet werden. Eine weitere Möglichkeit zur Herstellung des polymeren Werkstoffs ist die Extrudierquetschung der erfindungsgemäßen Dispersion, beispielsweise wie in DE 44 17 559 beschrieben. Dabei wird die Dispersion in einem Extruder in eine wässrige Phase und eine Polymerschmelze zerlegt. Dies führt zu einem besonders sauberen Produkt, da alle Hilfsstoffe, die in Wasser gelöst sind, mit der Wasserphase abgetrennt werden. Eine weitere Möglichkeit zur Herstellung des polymeren Werkstoffs ist die Koagulation der erfindungsgemäßen Dispersion, z.B. durch gängige Koagulationsverfahren, wie Gefrierkoagulation oder chemische Koagulation, z.B. mit mehrwertigen Ionen wie Aluminiumionen. Ebenfalls kann eine Sprühtrocknung der Dispersion durchgeführt werden.

Der erfindungsgemäße polymere Werkstoff, enthält die Hybrid-Partikel in vernetzter, vorzugsweise in physikalisch vernetzter Form. Unter physikalischer Vernetzung wird verstanden, dass es ohne die Ausbildung von chemischen Bindungen zum Aufbau eines Festkörpers kommt. Dabei ist bevorzugt, wenn das Vinylpolymer B zwischen den Phasen des Vinylpolymer A eine im Wesentlichen kontinuierliche Phase bildet. Die aus Vinylpolymer A und $SiO_2$-Partikeln bestehenden Bereiche der Hybrid-Partikel sind somit in eine kontinuierliche Phase aus Poymer B eingebettet. Diese kontinuierliche Phase ist im Wesentlichen frei von $SiO_2$-Partikeln. Bevorzugt beträgt der mittlere Abstand der Vinylpolymer A und $SiO_2$-Partikel enthaltenden Bereiche im Werkstoff 20-250 nm.

Die Hydrid-Partikel liegen nach dem Abtrennen des Wassers im Allgemeinen in einer weiter verarbeitbaren Form vor, z.B. als Pulver oder Granulat. Aus diesem Pulver oder Granulat lassen sich durch Weiterverarbeitung polymere Formkörper wie Filme, Platten und Bauteile gewinnen.

Der erfindungsgemäße polymere Werkstoff weist verschiedene vorteilhafte Eigenschaften auf, z.B. eine günstige Bruchdehnung im Allgemeinen > 200 %, vorzugsweise > 300 %, eine Zugfestigkeit im Allgemeinen > 4 MPas, bevorzugt > 5 MPa, ein E-Modul zwischen 0,3 und 3 MPa und eine Shore-Härte zwischen 20 und 90 Shore A.

Der polymere Werkstoff kann für verschiedene Anwendungen eingesetzt werden, z.B. als thermoplastisches Elastomer, als Dichtung, als Folie, als Klebfolie, als Werkstoff für Bauteile und als Trägerfilm.

## Beispiele

Die Erfindung wird nachfolgend anhand einiger Ausführungsbeispiele erläutert, die jedoch keinerlei limitierenden Charakter haben. Zunächst seien die nachfolgend verwendeten Messverfahren beschrieben.

Der Feststoffgehalt der Dispersion wurde durch Messung der Massendifferenz vor und nach dem Trocknen für 2 Stunden bei 120°C bestimmt.

Die Zugeigenschaften (Bruchdehnung, Zugfestigkeit, E-Modul (bei 100 % Dehnung)) wurden anhand von Prüfkörper analog DIN 53504 / ISO 37 (Form Die S2) auf einer Zugprüfmaschine der Fa. Zwick bestimmt. Die Prüfgeschwindigkeit betrug 200 mm/min. Zur Auswertung wurden mindestens 3 Probekörper geprüft und der Mittelwert gebildet.

Die Shore-Härte wurde nach DIN 53505 bestimmt.

Die Glasübergangstemperaturen Tg wurden per DMTA auf einem Haake Mars II Rheometer mit Tieftemperatureinheit und Festkörperklemme bestimmt. Die Torsion wurde mit konstanter Amplitude (abhängig vom Material und Probendicke aber im linear viskoelastischen Bereich) mit einer Frequenz von 1 Hz in das System eingebracht.

Die $SiO_2$-Partikelgröße wurde in flüssiger Phase mittels dynamischer Lichtstreuung auf einem "Dynamic Light Scattering Particle Size Analyzer LB-550" der Firma Horiba bei einer Konzentration von maximal 10 Gew.-% Partikeln erfolgen, wobei die Dispersion eine dynamische Viskosität < 3 mPas bei 25 °C aufweist. Als Teilchengröße wird der Median (D50-Wert) der Partikelgrößenverteilung angeben.

**Beispiel 1**

Aus 0,43 g Dilauroylperoxid, 46 g Butylacrylat, 25 g Dispersion von kolloidalen $SiO_2^-$ Partikeln (30 Gew.-% in Butylacrylat, sphärische 25 nm Partikel, agglomeratfrei, Oberfläche unreaktiv modifiziert, keine Doppelbindungen auf der Oberfläche), 0,5 g Allylmethacrylat, 0,3 g Natriumsalze von $C_{14}$-$C_{16}$-Alkansulfonsäuren und 58 g Wasser wird durch 15 s Emulgieren mit 24.000 UpM am UltraTurrax eine feinteilige Emulsion erzeugt. Die so hergestellte Emulsion wird darauf in einen Reaktor, enthaltend eine auf 80°C erwärmte Wasserphase aus 0,1 g des oben genannten Emulgators in 150 g Wasser, übergeführt und langsam unter Inertgas bei 80 °C gerührt. Nach 1 h ist die Polymerisation beendet. Darauf wird innerhalb von 1 h eine Emulsion zugetropft, hergestellt durch 15 s Emulgieren mit 24.000 UpM am UltraTurrax bestehend aus 0,44 g Methacrylsäure, 21,2 g MMA, 21,2 g Butylacrylat, 0,075 g Kaliumperoxodisulfat, 0,04 g Natriumsalze von $C_{14}$-$C_{16}$-Alkansulfonsäuren und 30,5 g Wasser. Danach wird noch 1 h bei 80 °C gerührt und durch Zugabe von 0,4 g 25%iger Ammoniaklösung neutralisiert. Nach Abkühlen und Filtration resultiert eine stabile wässrige Dispersion mit einem Feststoffgehalt von 31 %. Die Größe der erhaltenen Hybrid-Partikel beträgt ca. 1 μm. Die Dispersion ist bei Raumtemperatur filmbildend.

Zur Herstellung von Filmen wurde die Dispersion in eine Schale gegossen und 5 Tage bei Raumtemperatur getrocknet. Die Filme wurden bei 120 °C für 2 Stunden getempert und zeigen folgende mechanische Eigenschaften:

| | |
|---|---|
| Zugfestigkeit [MPa] | 5,69 |
| Bruchdehnung [%] | 386 |
| E-Modul [MPa] | 0,34 |
| Härte Shore A | 62 |

**Beispiel 2**

Aus 0,44 g Dilauroylperoxid, 46 g Butylacrylat, 25 g Dispersion von kolloidalen $SiO_2$-Partikeln (30 Gew.-% in Butylacrylat, sphärische 25 nm Partikel, agglomeratfrei, Oberfläche reaktiv modifiziert mit 3-Methacryloxypropyltrimethoxysilan), 0,3 g Natriumsalze von $C_{14}$-$C_{16}$-Alkansulfonsäuren und 58 g Wasser wird durch 15 s Emulgieren mit 24.000 UpM am UltraTurrax eine feinteilige Emulsion erzeugt.

Die so hergestellte Emulsion wird darauf in einen Reaktor, enthaltend eine auf 80°C erwärmte Wasserphase aus 0,1 g des oben genannten Emulgators in 150 g Wasser, überführt und langsam unter Inertgas bei 80°C gerührt. Nach 1 h ist die Polymerisation beendet. Darauf wird innerhalb von 1 h eine Emulsion zugetropft, hergestellt durch 15 s Emulgieren mit 24.000 UpM am UltraTurrax bestehend aus 0,44 g Methacrylsäure, 21,2 g MMA, 21,2 g Butylacrylat, 0,075 g Kaliumperoxodisulfat, 0,04 g Natriumsalze von $C_{14}$-$C_{16}$-Alkansulfonsäuren und 30,5 g Wasser. Danach wird noch 1 h bei 80°C gerührt und durch Zugabe von 0,4 g 25%iger Ammoniaklösung neutralisiert. Nach Abkühlen und Filtration resultiert eine stabile wässrige Dispersion mit einem Feststoffgehalt von 31 %. Die Größe der Hybrid-partikel beträgt ca. 0,5 μm. Die Dispersion ist bei Raumtemperatur filmbildend. Zur Herstellung von Filmen wurde die Dispersion in eine Schale gegossen und 5 Tage bei Raumtemperatur getrocknet. Die Filme wurden bei 120 °C für 2 Stunden getempert und zeigen folgende mechanische Eigenschaften:

| | |
|---|---|
| Zugfestigkeit [MPa] | 6,04 |
| Bruchdehnung [%] | 403 |
| E-Modul [MPa] | 0,54 |
| Härte Shore A | 50 |

**Beispiel 3**

Aus 2,15 g Dilauroylperoxid, 77,42 g MMA, 115,48 g Butylacrylat, 163,6 g Dispersion von kolloidalen $SiO_2$-Partikeln (30 Gew.-% in Butylacrylat, sphärische 25 nm Partikel, agglomeratfrei, Oberfläche reaktiv modifiziert mit 3-Methacryloxypropyltrimethoxysilan), 1,6 g Natriumsalze von $C_{14}$-$C_{16}$-Alkansulfonsäuren und 282,5 g Wasser wird durch Emulgieren (60s mit 24.000Upm am UltraTurrax) eine feinteilige Emulsion erzeugt. Diese wird in eine auf 80°C vorgewärmte Vorlage von 750 g Wasser und 0,5 g Natriumsalze von $C_{14}$-$C_{16}$-Alkansul-fonsäuren gegeben und innerhalb von 60 min bei 80°C unter langsamen Rühren polymerisiert. Direkt im Anschluss dosiert man bei 80 °C innerhalb von 90 min eine Emulsion, hergestellt aus 2,15 g Methacrylsäure, 106 g MMA, 106 g Butylacrylat, 0,2 g Natriumsalze von $C_{14}$-$C_{16}$-Alkansulfonsäuren, 0,25 g Kaliumperoxodisulfat und 152,5 g Wasser. Darauf wird noch 1 h bei 80°C gerührt. Schließlich wird die Dispersion durch Zugabe von 2 g 25%iger Ammoniaklösung neutralisiert. Es resultiert eine wässrige Dispersion mit einem Feststoffgehalt von 32 %. Die Dispersion ist bei Raumtemperatur filmbildend.

Zur Herstellung von Filmen wurde die Dispersion in eine Schale gegossen und 5 Tage bei Raumtemperatur getrocknet. Die so hergestellten Filme wurden teils direkt auf ihre Eigenschaften untersucht, teils wurden die Filme vor der Untersuchung noch bei 120 °C für 2 Stunden getempert. Die Filme weisen zwei Glastemperaturen auf und zeigen folgende mechanische Eigenschaften:

| | ungetempert | getempert |
|---|---|---|
| Zugfestigkeit [MPa] | 8,0 | 7,8 |
| Bruchdehnung [%] | 382 | 397 |
| E-Modul [MPa] | 0,60 | 0,53 |
| Härte Shore A | 41 | 37 |
| $T_g 1 [°C]$ | -2,2 | -1,5 |
| $T_g 2 [°C]$ | 37,5 | 37,8 |

**Beispiel 4**

Aus 2,15 g Dilauroylperoxid, 77,42 g MMA, 115,48 g Butylacrylat, 163,6 g Dispersion von kolloidalen $SiO_2$-Partikeln (30 Gew.-% in Butylacrylat, sphärische 25 nm Partikel, agglomeratfrei, Oberfläche reaktiv modifiziert mit 3-Methacryloxypropyltrimethoxysilan), 1,6 g Natriumsalze von $C_{14}$-$C_{16}$-Alkansulfonsäuren und 282,5 g Wasser wird durch Emulgieren (60s mit 24.000Upm am UltraTurrax) eine feinteilige Emulsion erzeugt. Diese wird in eine Vorlage von 400 g Wasser und 0,5 g Natriumsalze von $C_{14}$-$C_{16}$-Alkansulfonsäuren gegeben und innerhalb von 60 min bei 80 °C zu einer Mikrosuspension polymerisiert. Direkt im Anschluss dosiert man bei 80 °C innerhalb von 90 min eine Emulsion, hergestellt aus 2,15 g Methacrylsäure, 106 g MMA, 106 g Butylacrylat, 0,2 g Natriumsalze von $C_{14}$-$C_{16}$-Alkansulfonsäuren, 0,25 g Kaliumperoxodisulfat und 152,5 g Wasser. Darauf wird noch 1 h bei 80 °C gerührt. Schließlich wird die Dispersion durch Zugabe von 2 g 25%iger Ammoniaklösung neutralisiert. Es resultiert eine wässrige Dispersion mit einem Feststoffgehalt von 40,3 %. Die Dispersion ist bei Raumtemperatur filmbildend.
Zur Herstellung von Filmen wurde die Dispersion in eine Schale gegossen und 5 Tage bei Raumtemperatur getrocknet. Die Filme zeigen folgende mechanische Eigenschaften:

| Zugfestigkeit [MPa] | 6,1 |
|---|---|
| Bruchdehnung [%] | 382 |
| E-Modul [MPa] | 0,43 |
| Härte Shore A | 34 |

**Beispiel 5**

Aus 2,15 g Dilauroylperoxid, 153,76 g MMA, 39,24 g Butylacrylat, 163,60 g Dispersion von kolloidalen $SiO_2$-Partikeln (30 Gew.-% in Butylacrylat, sphärische 25 nm Partikel, agglomeratfrei, Oberfläche reaktiv modifiziert mit 3-Methacryloxypropyltrimethoxysilan), 1,6 g Natriumsalze von $C_{14}$-$C_{16}$-Alkansulfonsäuren und 282,5 g Wasser wird durch Emulgieren (60s mit 24.000Upm am UltraTurrax) eine feinteilige Emulsion erzeugt. Diese wird in eine Vorlage von 750 g Wasser und 0,5 g Natriumsalze von $C_{14}$-$C_{16}$-Alkansulfonsäuren gegeben und innerhalb von 60 min bei 80°C zu einer Mikrosuspension polymerisiert. Direkt im Anschluss dosiert man bei 80 °C innerhalb von 90 min eine Emulsion, hergestellt aus 2,19 g Methacrylsäure, 106 g MMA, 106 g Butylacrylat, 0,2 g Natriumsalze von $C_{14}$-$C_{16}$-Alkansulfonsäuren, 0,25 g Kaliumperoxodisulfat und 152,5 g Wasser. Darauf wird noch 1 h bei 80 °C gerührt. Schließlich wird die Dispersion durch Zugabe von 2 g 25%iger Ammoniaklösung neutralisiert. Es resultiert eine wässrige Dispersion mit einem Feststoffgehalt von 32 %. Die Dispersion ist bei Raumtemperatur filmbildend.
Zur Herstellung von Filmen wurde die Dispersion in eine Schale gegossen und 5 Tage bei Raumtemperatur getrocknet. Die Filme zeigen folgende mechanische Eigenschaften:

| Zugfestigkeit [MPa] | 15,8 |
|---|---|
| Bruchdehnung [%] | 290 |
| E-Modul [MPa] | 2,57 |
| Härte Shore A | 71 |

**Beispiel 6**

Aus 2,2 g Dilauroylperoxid, 170 g Butylacrylat, 60 g Styrol, 132 g Dispersion von kolloidalen $SiO_2$-Partikeln (30 Gew.-% in Butylacrylat, sphärische 25 nm Partikel, agglomeratfrei, Oberfläche reaktiv modifiziert mit 3-Methacryloxypropyltrimethoxysilan), 1,6 g Natriumsalze von $C_{14}$-$C_{16}$-Alkansulfonsäuren und 281 g Wasser wird durch Emulgieren (60 s mit 24.000 UpM am UltraTurrax) eine feinteilige Emulsion erzeugt. Diese Emulsion wird in eine auf 80 °C erwärmte Vorlage von 0,5 g Natriumsalze von $C_{14}$-$C_{16}$-Alkansulfonsäuren in 805g Wasser gegeben und 60 min unter Intergas bei 80°C polymerisiert. Direkt im Anschluss dosiert man bei 80 °C innerhalb von 60 min eine Emulsion, hergestellt durch 30 s Emulgieren mit 24.000 UpM am UltraTurrax aus 200 g MMA, 4,2 g Butylacrylat, 0,45 g 2-Ethylhexylthioglykolat, 0,15 g Natriumsalze von $C_{14}$-$C_{16}$-Alkansulfonsäuren, 0,43 g Kaliumperoxodisulfat und 153 g Wasser. Darauf wird noch eine Stunde bei 80 °C gerührt. Es resultiert eine Dispersion mit einer Teilchengröße von ca. 0,5 $\mu$m und einem Feststoffgehalt von 30 %.
Die Dispersion wird in PE-Flaschen gefüllt und bei -25°C eingefroren. Nach dem Auftauen erhält man in jeder PE-Flasche einen weißen, elastischen Block, aus dem das Wasser heraus gedrückt werden kann. Nach Trocknung erhält man weiße Kunststoffkörper. Diese lassen sich bei 150°C zu transparenten, zähen Kunststoffplatten formen.

**Patentansprüche**

1. Hybrid-Partikel, enthaltend mindestens zwei Vinylpolymere (Vinylpolymere A und B), wobei Vinylpolymer A kolloidale $SiO_2$-Partikel mit einer mittleren Partikelgröße von 1 bis 150 nm enthält und Vinylpolymer B in der Lage ist, Hybrid-Partikel miteinander zu vernetzen.

2. Hybrid-Partikel gemäß Anspruch 1, worin Vinylpolymer A und Vinylpolymer B sich in ihrer chemischen Zusammensetzung, ihrer chemischen Uneinheitlichkeit, ihrer Taktizität, der Glastemperatur, ihres Molekulargewichts und/oder ihres Vernetzungsgrades voneinander unterscheiden.

3. Hybrid-Partikel, gemäß Anspruch 1 oder 2, worin Vinylpolymer A chemisch vernetzt ist und Vinylpolymer B chemisch unvernetzt ist.

4. Hybrid-Partikel, gemäß einem oder mehreren der Ansprüche 1 bis 3, worin die $SiO_2$-Partikel durch unreaktive Gruppen und/oder durch reaktive Gruppen oberflächenmodifiziert sind.

5. Hybrid-Partikel gemäß einem oder mehreren der Ansprüche 1 bis 4, enthaltend

   a) ein Polymer von Vinylmonomeren, welches durch reaktiv modifizierte $SiO_2$-Partikel chemisch vernetzt ist (Vinylpolymer A), und
   b) ein chemisch unvernetztes Polymer von Vinylmonomeren (Vinylpolymer B).

6. Hybrid-Partikel, gemäß einem oder mehreren der Ansprüche 1 bis 5, wobei die Vinylmonomere ausgewählt wurden aus der Gruppe der Diene wie Isopren oder Butadien, Vinylhalogenide wie Vinylchlorid, Vinylester wie Vinylacetat und Vinylester $\alpha$-verzweigter Monocarbonsäuren, Styrol und substituierte Styrole, Acryl- und Methacrylsäure und deren Derivate wie z.B. Ester der (Meth)acrylsäure, (Meth)acrylsäurenitrile, und (Meth)acrylsäureanhydride, besonders bevorzugt aus der Gruppe der Vinylester, Styrol und substituierte Styrole, sowie Acryl- und Methacrylsäurederivate, ganz besonders bevorzugt aus der Gruppe der Vinylester, Styrol sowie Acryl- und Methacrylsäure und deren Ester.

7. Hybrid-Partikel gemäß einem oder mehreren der Ansprüche 1 bis 6, worin das Gewichtsverhältnis von Vinylpolymer A zu Vinylpolymer B im Bereich von 10:1- 1:2, vorzugsweise von 5:1-1:1, besonders bevorzugt im Bereich von 3 : 1 - 1,5 : 1 liegt.

8. Hybrid-Partikel gemäß einem oder mehreren der Ansprüche 1 bis 7, mit einer mittleren Partikelgröße von 100 bis 5.000 nm, vorzugsweise von 150 bis 2.000 nm, besonders bevorzugt zwischen 200 und 1.500 nm.

9. Hybrid-Partikel gemäß einem oder mehreren der Ansprüche 1 bis 8, worin das Hybrid-Partikel mindestens 10 $SiO_2$-Partikel, vorzugsweise mindestens 25 $SiO_2$-Partikel, besonders bevorzugt mindesten 50 $SiO_2$-Partikel enthält.

10. Hybrid-Partikel gemäß einem oder mehreren der Ansprüche 1 bis 9, worin die $SiO_2$-Partikel zu wenigstens 50%, vorzugsweise wenigstens 70%, weiter vorzugsweise wenigstens 80%, weiter vorzugsweise wenigstens 90% aus vereinzelten, nicht aggregierten oder agglomerierten Primärpartikeln bestehen.

11. Hybrid-Partikel nach einem oder mehreren der Ansprüche 1 bis 10, worin der Gehalt an $SiO_2$-Partikeln 1 bis 40 Gew.-%, vorzugsweise 1 bis 30 Gew.-%, weiter vorzugsweise 1 bis 15 Gew.-%, besonders bevorzugt 2 bis 8 % beträgt.

12. Hybrid-Partikel gemäß einem oder mehreren der Ansprüche 1 bis 11, worin das Acrylat Methylacrylat, Ethylacrylat, Butylacrylat oder Ethylhexylacrylat ist.

13. Hybrid-Partikel gemäß einem oder mehreren der Ansprüche 1 bis 12, worin Vinylpolymer A und Vinylpolymer B Copolymere von Acrylat und Methacrylat sind.

14. Hybrid-Partikel gemäß einem oder mehreren der Ansprüche 1 bis 13, worin Vinylpolymer A und Vinylpolymer B Copolymere von Methylmethacrylat mit Methylacrylat, Ethylacrylat, Butylacrylat und/oder Ethylhexylacrylat sind.

15. Verfahren zur Herstellung eines Hybrid-Partikels gemäß einem oder mehreren der Ansprüche 1 bis 14, wobei

   a) in einer ersten Polymerisationsstufe eines oder mehr Vinylmonomere in Gegenwart von kolloidalen $SiO_2$-Partikeln mit einer mittleren Partikelgröße von 1 bis 150 nm polymerisiert werden, und
   b) in einer zweiten Polymerisationsstufe eines oder mehr Vinylmonomere in Gegenwart des in der ersten Polymerisationsstufe erhaltenen Vinylpolymers polymerisiert werden.

16. Verfahren nach Anspruch 15, wobei die $SiO_2$-Partikel in der ersten Polymerisationsstufe in einer in Wasser emulgierten nicht-wässrigen Phase, insbesondere in den Vinylmonomeren, dispergiert vorliegen.

**17.** Wässrige Polymer-Dispersion, enthaltend Hybrid-Partikel gemäß einem oder mehreren der Ansprüche 1 bis 14.

**18.** Polymerer Werkstoff, enthaltend vernetzte Hybrid-Partikel, welche mindestens zwei Vinylpolymere (Vinylpolymere A und B) enthalten, wobei Vinylpolymer A kolloidale $SiO_2$-Partikel mit einer mittleren Partikelgröße von 1 bis 150 nm enthält und Vinylpolymer B die Hybrid-Partikel untereinander vernetzt.

**19.** Polymerer Werkstoff gemäß Anspruch 18, worin das Vinylpolymer B zwischen den Phasen des Vinylpolymer A eine im Wesentlichen kontinuierliche Phase bildet.

**20.** Polymerer Werkstoff, erhältlich durch Entfernen des Wassers aus einer Polymer-Dispersion nach Anspruch 17.

Europäisches
Patentamt

European
Patent Office

Office européen
des brevets

**EUROPÄISCHER RECHERCHENBERICHT**

Nummer der Anmeldung

EP 09 01 3117

| | EINSCHLÄGIGE DOKUMENTE | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| A | US 2006/122332 A1 (YANG SHIJUN [US] ET AL YANG SHIJUN [US] ET AL) 8. Juni 2006 (2006-06-08) * Beispiele 1-4 * ----- | 1-20 | INV. C08L33/12 C08F20/06 C08F20/14 C08F20/18 |
| X | EP 0 703 192 A1 (UBE NITTO KASEI CO [JP]) 27. März 1996 (1996-03-27) * Beispiel 3 * ----- | 1-14 | |
| E | EP 2 110 415 A1 (NANORESINS AG [DE]) 21. Oktober 2009 (2009-10-21) * Absatz [0075] - Absatz [0085] * ----- | 1-20 | |
| | | | RECHERCHIERTE SACHGEBIETE (IPC) |
| | | | C08L C08F |

Der vorliegende Recherchenbericht wurde für alle Patentansprüche erstellt

| Recherchenort | Abschlußdatum der Recherche | Prüfer |
|---|---|---|
| Den Haag | 8. März 2010 | Schmidt, Helmut |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 09 01 3117

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-03-2010

| Im Recherchenbericht angeführtes Patentdokument | | Datum der Veröffentlichung | Mitglied(er) der Patentfamilie | | Datum der Veröffentlichung |
|---|---|---|---|---|---|
| US 2006122332 | A1 | 08-06-2006 | KEINE | | |
| EP 0703192 | A1 | 27-03-1996 | CN | 1126984 A | 17-07-1996 |
| | | | WO | 9527680 A1 | 19-10-1995 |
| | | | JP | 3703487 B2 | 05-10-2005 |
| | | | US | 5750258 A | 12-05-1998 |
| EP 2110415 | A1 | 21-10-2009 | WO | 2009127433 A1 | 22-10-2009 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1216262 A
- EP 0505230 A1
- EP 0926170 B1
- EP 1366112 A
- EP 2025722 A
- EP 08007625 A
- EP 08007580 A
- EP 08007581 A
- EP 08007582 A
- DE 3632215 A1
- DE 4417559

**In der Beschreibung aufgeführte Nicht-Patentliteratur**

- *Angewandte Makromolekulare Chemie,* 1996, vol. 242, 105-122
- **J.Brandrup ; E.H. Immergut.** Polymer Handbook. J. Wiley, 1975
- **T.G. Fox.** *Bull. Am. Phys. Soc. (Ser. II,* 1956, vol. 1, 123
- Römpp Chemie-Lexikon. vol. 6, 4836
- *J. Colloid Interface Sci,* 1968, vol. 26, 62